# EUROPEAN PATENT APPLICATION

(11) **EP 4 470 973 A1**
(43) Date of publication of application: **04.12.2024**
(21) Application number: 23305879.1
(22) Date of filing: 02.06.2023
(51) Int. Cl.: C01B 21/086, C01B 21/093

(54) **PURIFICATION OF CRUDE BIS(SULFONYL)IMIDE MIXTURE BY MELT CRYSTALLIZATION**

(71) Applicant: SPECIALTY OPERATIONS FRANCE, 69003 Lyon (FR)
(72) Inventor: SCHMITT, Etienne, 69190 Saint-Fons (FR); CARVIN, Philippe, 69190 Saint-Fons (FR)
(74) Representative: Benvenuti, Federica

(57) **Abstract**

The present invention relates to a process for purifying a crude bis(sulfonyl)imide mixture comprising a compound of Formula (I):

[F-SO₂-N-SO₂-R¹]⁻[X]⁺ (I),

wherein R¹ is F or a linear or branched alkyl, substituted with at least one fluorine atom, and X is H or NR^{N}₄, with each of R^{N}, equal to or different from each other, being H or a C₁-C₁₆ hydrocarbon group, preferably R^{N} being H, and wherein the process comprises a melt crystallization.

## Description

### TECHNICAL FIELD

The present invention relates to a process for purifying a crude bis(sulfonyl)imide mixture comprising a compound of Formula (I) by melt crystallization:

[F-SO₂-N-SO₂-R¹]⁻[X]⁺ (I),

wherein R¹ is F or a linear or branched alkyl, substituted with at least one fluorine atom, and X is selected from the group consisting of H and NR^{H}₄, with R^{H} being H or a C₁-C₁₂ hydrocarbon moiety, being understood that two or more R^{H} could be part of a cyclic structure.

### TECHNICAL BACKGROUND

Hydrogen bis(fluorosulfonyl)imide (HFSI) and ammonium bis(fluorosulfonyl)imide (NH₄FSI) are precursors for a variety of compounds, including alkali-metal bis(fluorosulfonyl)imide (FSI) salts, such as lithium FSI (LiFSI), sodium FSI (NaFSI), and potassium FSI (KFSI), among others. LiFSI, for example, is an important additive in the electrolyte of lithium-ion batteries and high purity and consistent quality of said compound and its precursors is crucial.

When crude HFSI or crude NH₄FSI is used as a precursor material, e.g. for LiFSI, any impurities present in the precursor material, such as F⁻, Cl⁻ FSO₃⁻, or SO₄²⁻ will lead to impurities in the LiFSI itself, such as LiF, LiCl, LiFSO₃, or Li₂SO₄.

In the prior art, the purification of HFSI by distillation, in particular azeotropic distillation, or crystallization from organic solvents (see e.g. US 10,734,664 B1) is disclosed. Likewise, the prior art discloses the purification of NH₄FSI by distillation, in particular by azeotropic distillation, or crystallization from organic solvents (see e.g. WO 2021/074142 or WO 2022/053002). However, these methods are neither completely satisfactory nor do they provide high purity with consistent low levels of impurities. In particular, the conditions of the prior art purification techniques for HFSI and NH₄FSI can cause thermal decomposition or hydrolysis phenomena. In addition, distillation may not be effective for removing impurities with a similar boiling point. For example, HFSI (b.p. 170 °C) has a similar boiling point to FSO₃H (b.p. 163 °C) so that purification by distillation is cumbersome and does not result in optimal purity and yield.

Therefore, it is an object of the present invention to provide a process for purifying bis(sulfonyl)imides, such as HFSI and NH₄FSI, that results in excellent purity. In addition, it is an object of the present invention to provide a process for purifying bis(sulfonyl)imides, such as HFSI and NH₄FSI, that consistently results in high purity, regardless of the specific impurities in the crude material.

### SUMMARY OF THE INVENTION

These objects have surprisingly been solved by a process for purifying a crude bis(sulfonyl)imide mixture comprising a compound of Formula (I):

[F-SO₂-N-SO₂-R¹]⁻[X]⁺ (I),

wherein R¹ is F or a linear or branched alkyl, substituted with at least one fluorine atom, and X is H or NR^{N}₄, with each of R^{N}, equal to or different from each other, being H or a C₁-C₁₆ hydrocarbon group, preferably R^{N} being H, and wherein the process comprises a melt crystallization.

It has been found that the process of the present invention allows to provide the compound of Formula (I) with excellent purities.

Furthermore, it has been found that such a process is more energy- and cost-efficient than the conventional purification processes. Furthermore, the process of the present invention is more environmentally friendly than the processes of the prior art, wherein organic solvents are used for crystallization. In particular, the use of organic solvents can be eliminated, thus also eliminating the need for recycling loops for the solvent. In addition, it has been found that the process allows the purification of a compound of Formula (I) under mild conditions.

In an aspect, the present invention relates to the use of melt crystallization for purifying a crude bis(sulfonyl)imide mixture comprising a compound of Formula (I):

[F-SO₂-N-SO₂-R¹]⁻[X]⁺ (I).

### DETAILED DESCRIPTION OF THE INVENTION

The following definitions are relevant in connection with the embodiments of the present invention.

The meaning of the term "comprising" is to be interpreted as encompassing all the specifically mentioned features as well optional, additional, unspecified ones, whereas the term "consisting of" only includes those features as specified. Therefore, "comprising" includes as a limiting case the composition specified by "consisting of".

As used herein, the singular forms "a", "an", and "the" include both singular and plural referents unless the context clearly dictates otherwise. By way of example, "a melt crystallization" means one melt crystallization or more than one melt crystallization.

The term "wt.-%" refers to the amount of the respective ingredient by weight based on the total amount of the composition, unless noted otherwise. The term "mol-%" refers to the amount of the respective ingredient by mol based on the total amount of mols of the composition, unless noted otherwise.

The term "melt crystallization" refers to a process of crystallization from a melt. Such a process generally does not employ any solvents, such as organic solvents. The process of melt crystallization as well as suitable apparatuses and the different sub-types of melt crystallization are described in Chapter 9 "Melt Crystallization" by Ulrich et al. in the book "Handbook of Industrial Crystallization", Cambridge University Press, 2019.

Preferred embodiments according to the invention are defined hereinafter. The preferred embodiments are preferred alone or in combination. Further, it is to be understood that the following preferred embodiments refer to all aspects of the present invention, i.e. the process for purification as well as the use of melt crystallization.

In an embodiment, the invention relates to a process for purifying a crude bis(sulfonyl)imide mixture comprising a compound of Formula (I):

[F-SO₂-N-SO₂-R¹]⁻[X]⁺ (I),

wherein R¹ is F or a linear or branched alkyl, substituted with at least one fluorine atom, and X is H or NR^{N}₄, with each of R^{N}, equal to or different from each other, being H or a C₁-C₁₆ hydrocarbon group, preferably R^{N} being H, and wherein the process comprises a melt crystallization.

The term "crude bis(sulfonyl)imide mixture" refers to a composition that comprises the above-mentioned compound of Formula (I), i.e. crude compound of Formula (I), and which further comprises at least one impurity. Said at least one impurity may depend upon the method used for manufacturing compound of Formula (I). It is generally recognized that usual impurities associated with the compound of Formula (I) include impurities selected from the group consisting of fluorides, sulfates and fluorosulfates compounds. In a non-limiting embodiment, the crude bis(sulfonyl)imide mixture comprises at least 50 wt.-%, preferably at least 80 wt.-%, more preferably at least 90 wt.-% of the compound of Formula (I). Upper boundaries for the content of compound of Formula (I) in crude bis(sulfonyl)imide mixture is not particularly limited. In other terms, the amount of impurities in the crude bis(sulfonyl)imide mixture may largely vary, and may be as high as up to 20 wt.%, or preferably up to 10 wt.%. Yet, it is generally acknowledged that the amount of impurities in the crude bis(sulfonyl)imide mixture is generally of at least 50 ppm, preferably at least 100 ppm, more preferably at least 250 ppm; and/or of at most 100 000 ppm, preferably of at most 75 000 ppm, more preferably at most 50 000 ppm, in the crude bis(sulfonyl)imide mixture.

The term "linear or branched alkyl" refers to an alkyl usually having 1 to 6 carbon atoms, more preferably 1 to 4 carbon atoms, e.g. 3 or 4 carbon atoms. Examples of alkyl groups are methyl, ethyl, n-propyl, iso-propyl, n-butyl, 2-butyl, iso-butyl, tert-butyl, n-pentyl, 2-methylbutyl, 2,2-dimethylpropyl, 1-ethylpropyl, n-hexyl, 1,1-dimethylpropyl, 1,2-dimethylpropyl, 1-methylpentyl, 2-methylpentyl, 3-methylpentyl, 4-methyl-pentyl, 1,1-dimethylbutyl, 1,2-dimethylbutyl, 1,3-dimethylbutyl, 2,2-dimethylbutyl, 2,3-dimethyl-butyl, 3,3-dimethylbutyl, 1-ethylbutyl, 2-ethylbutyl, 1,1,2-trimethylpropyl, 1,2,2-trimethylpropyl, 1- ethyl-1-methylpropyl, and 1-ethyl-2-methylpropyl.

In an embodiment, the process of the present invention comprises the steps of:
a) melting the crude bis(sulfonyl)imide mixture at a temperature exceeding the melting point for the compound of Formula (I) to obtain a molten mixture,
b) cooling the molten mixture at least partially to cause at least partial crystallization of the compound of Formula (I), to obtain a crystallized mixture and a molten residue, and
c) separating the molten residue from the crystallized mixture.

The above steps a) to c) are preferably conducted in chronological order.

Thus, first a molten mixture is provided, subsequently a crystallized mixture and a molten residue is obtained and subsequently the molten residue is separated (e.g. drained off). Conducting said process, the crystallized mixture contains a smaller content of impurities than the crude bis(sulfonyl)imide mixture, whereas the molten residue contains a larger content of impurities than the crude bis(sulfonyl)imide mixture. In step c) the molten residue may be separated from the crystallized mixture by draining the molten residue.

Step a) may be reformulated as providing the crude bis(sulfonyl)imide mixture as a molten mixture. Thus, the process of the present invention comprises the steps of:
a) providing a molten mixture of the crude bis(sulfonyl)imide mixture,
b) cooling the molten mixture at least partially to cause at least partial crystallization of the compound of Formula (I), to obtain a crystallized mixture and a molten residue, and
c) separating the molten residue from the crystallized mixture. Such a reformulated step a) may be suitable in case the crude
bis(sulfonyl)imide mixture is liquid at ambient temperature (for example, in the case of hydrogen bis(fluorosulfonylimide), aka HFSI, which has a melting point of 17 °C).

In a preferred embodiment, R¹ in Formula (I) is F and X is H or NH₄, or otherwise said, the compound of Formula (I) is hydrogen bis(fluorosulfonyl)imide or ammonium bis(fluorosulfonyl)imide.

Advantageously, the process of the present invention is used for at least partially removing at least one impurity selected from the group consisting of fluorides, sulfates, and fluorosulfates compounds; and mixtures of any of the same. However, the process is not particularly limited and any commonly found impurity in compound (I) may be at least partially removed, together with the impurities listed above.

In an embodiment, the crystallized mixture has a purity of at least 95.0 wt.-%, preferably of at least 97.0 wt.-%, more preferably of at least 99.0 wt.-%. In an embodiment, the crystallized mixture has a purity of at least 95.0 mol-%, preferably of at least 97.0 mol-%, more preferably of at least 99.0 mol-%. Purity refers to the amount of compound of Formula (I) in the crystallized mixture. The total purity can be measured by differential scanning calorimetry, ¹⁹F-NMR or by elemental analysis. Preferably, the total purity is measured by ¹⁹F-NMR and comparing the peak intensity (integral under the peak) to a reference sample containing pure compound of formula (I). ¹⁹F-NMR can be measured on a Bruker Avance 400 using trifluorotoluene or trifluoromethoxybenzene signals as internal references.

In an embodiment, the crystallized mixture has advantageously a F⁻content of ≤ 2000 ppm, preferably of ≤ 1500 ppm, a SO₄²⁻ content of ≤ 150 ppm, preferably of ≤ 100 ppm.

Further, the crystallized mixture has advantageously a FSO₃⁻ content of ≤ 20 000 ppm, preferably ≤ 10 000 ppm; the crystallized mixture may advantageously have a FSO₃⁻ content of ≤ 1.8 mol-%, preferably of ≤ 1.1 mol-%.

Still, the FSO₃⁻ content of the crystallized mixture obtained via the process of the present invention may be as low as ≤ 1000 ppm, more preferably ≤ 500 ppm, even more preferably ≤ 100 ppm, and even more preferably ≤ 50 ppm. A preferred FSO₃⁻ content of ≤ 25 ppm, or ≤ 10 ppm can be achieved by this process . For impurities which are ionic compounds, the content of impurities can be determined using ion-exchange chromatography. This is notably the case for the determination of fluorides, sulfate and fluorosulfate anions.

In an embodiment, the process of the present invention is conducted under a strictly inert atmosphere, preferably under strictly anhydrous argon; and/or in a moisture-free atmosphere. The use of a strictly inert atmosphere further increases the purity of the crystallized mixture, since the compound of Formula (I) may undergo hydrolysis phenomena when contacted with water especially at elevated temperatures.

The expression "strictly inert" atmosphere is used within the frame of the present invention to designate a moisture content of less than 1000 ppm, preferably of less than 800 ppm, more preferably of less than 500 ppm.

Similarly, the expressions "strictly anhydrous" is used herein with the same meaning.

In an embodiment, the process is a fractionalized melt crystallization. Thus, the melt crystallization process sequence of steps a) to c) may be conducted more than one time, e.g. a second time (steps a2) to c2)), a third time, or an even larger number of times. Good results have been notably obtained with two, three, four or even five subsequent melt crystallization process sequences of steps aᵢ) to cᵢ).

The crystallized mixture obtained after steps a) to c) of the first melt crystallization process sequence is the first crystallized mixture. In an embodiment, the crystallized mixture is crystallized at least a second time by melt crystallization, comprising the steps of
a2) melting the first crystallized mixture at a temperature exceeding the melting point for the compound of Formula (I) to obtain a second molten mixture,
b2) cooling the second molten mixture at least partially to cause at least partial crystallization of the compound of Formula (I), to obtain a second crystallized mixture and a second molten residue, and
c2) separating the second molten residue from the second crystallized mixture.

The conditions, such as temperature and time, may be the same for respective steps a) to c) compared to respective steps a2) to c2), or may differ. Indeed, as the amount of impurities in the first crystallized mixture is advantageously lower than the amount of impurities in the crude bis(sulfonyl)imide mixture, crystallization temperature and kinetics may consequently be impacted, so that temperature and crystallization times may vary.

In an embodiment, the process of the present invention further comprises a step d) which may comprise washing and/or sweating the crystallized mixture. So, step d) may comprise one or more than one washing step; it may comprise one or more than one sweating step; or it may comprise a combination of one or more than one washing step and one or more than one sweating step. Indeed, sweating and washing are not mutually exclusive; during washing, sweating may also occur. For both the sweating and the washing step, the crystallized mixture may remain fixed to the cooling surface on which the crystallized mixture crystallized or may be suspended in a liquid medium or may be supported on a support, e.g. a filter.

The term "washing" is hereby construed according to its usual meaning, i.e. contacting the crystallized mixture with a rinsing medium. The said rinsing medium is advantageously a bis(sulfonyl)imide mixture comprising a compound of Formula (I), as detailed above, which has a higher purity than the crude bis(sulfonyl)imide mixture. Generally, the said rinsing medium may be a purified bis(sulfonyl)imide mixture comprising a compound of Formula (I) having the purity targeted in the method of the present invention. At best, it may be the pure compound of Formula (I).

Rinsing is advantageously used to mechanically push away any impurities and substitute any impurities with a mixture comprising a compound of Formula (I) of higher purity, as explained above, from the surface of the crystallized mixture. Yet, the washing step may be a diffusion washing step, wherein the rinsing medium can favour the diffusion of impurities out of the crystallized mixture. The rinsing and diffusion washing steps are not necessarily mutually exclusive steps.

The term "sweating" refers to a temperature-induced purification step based on partial melting of the crystallized mixture up to close to the melting point (generally 0.5 to 4 °C below) of the pure compound of Formula (I). Such a sweating step advantageously leads to remelting of any impurities that may adhere to the crystal surface of the crystallized mixture and of any impurities contained in the pores of the crystallized material, which can then be drained off as a sweating fraction. Since the drained off sweating fraction still has a high purity, it may be advantageous to recycle the sweating fraction(s). Further, melt trapped in the crystallized mixture and/or adherent to the surface of the crystallized mixture drains off during the partial melting and can then be removed from the crystallized mixture. Such a process step further increases purity of the crystallized mixture.

Sweating may be performed either in continuous or discontinuous mode. In a continuous mode, sweating duration may be continued, until the continuously collected instant sweating stream possesses the target purity.

In a discontinuous mode, several successive sweating fractions may be collected; in such cases, sweating may be repeated several times, collecting several successive sweating fractions, i.e. at least one time, at least two times, or at least three times. In this manner, sweating fractions of increasing purity are removed. Thus, in a preferred embodiment, sweating step d) comprises at least one, at least two or at least three sweating sub-steps. Such a sweating step d) is advantageous, as it is conducted for a period of time ranging from few minutes to few hours, depending upon sweating conditions, while at the same time further increasing purity.

As said the entire melt crystallization process sequence may be repeated more than once. If the melt crystallization process sequence is conducted several times, e.g. two times comprising steps a) to c) and a2) to c2), it is preferred to conduct a washing and/or sweating step d) after step c) and another washing and/or sweating step d2) after step c2) etc.

Thus, in a particular preferred embodiment, the process of the present invention comprises the steps of:
a) melting the crude bis(sulfonyl)imide mixture at a temperature exceeding the melting point for the compound of Formula (I) to obtain a first molten mixture,
b) cooling the first molten mixture at least partially to cause at least partial crystallization of the compound of Formula (I), to obtain a first crystallized mixture and a first molten residue,
c) separating the first molten residue from the first crystallized mixture,
d) washing and/or sweating the first crystallized mixture,
a2) melting the first crystallized mixture from step d) at a temperature exceeding the melting point for the compound of Formula (I) to obtain a second molten mixture,
b2) cooling the second molten mixture at least partially to cause at least partial crystallization of the compound of Formula (I), to obtain a second crystallized mixture and a second molten residue,
c2) separating the second molten residue from the second crystallized mixture, and
d2) washing and/or sweating the second crystallized mixture.

As said, it is still within the scope of the present invention to conduct the melt crystallization more than two times; in particular, the process of the invention may comprise a number x of subsequent melt crystallization process sequences, wherein the crystallized mixture obtained from each *n-1* melt crystallization process sequence, with *n* being 1 to *x*, is submitted to the steps of:
aₙ) melting the (*n-1)*-crystallized mixture from step dₙ₋₁) of previous melt crystallization sequence at a temperature exceeding the melting point for the compound of Formula (I), to obtain a *n*-molten mixture,
bₙ) cooling the *n*-molten mixture at least partially to cause at least partial crystallization of the compound of Formula (I), to obtain a *n-*crystallized mixture and a *n*-molten residue,
cₙ) separating the *n*-crystallized mixture from the *n*-molten residue, and
dₙ) washing and/or sweating the *n*-crystallized mixture.

As said, the number x of subsequent melt crystallization process sequences is not particularly limited, and may vary from 2 to 10, preferably from 2 to 8, including notably 2, 3, 4, 5, 6, 7 and 8.

The process may be a batchwise, a semi-batch or a continuous process. The crystallization may be a solid-layer crystallization or a suspension crystallization. It is preferred that the crystallization is a solid-layer crystallization. In the solid-layer process (also known as layer melt crystallization), the crystallized mixture is formed on a cooled surface, such as a metal coil or plate. Otherwise said, the crystals of the crystallized mixtures are formed and grow in contact with the said cooled surface. Contrary to solid-layer crystallization, in suspension crystallization, the crystallized mixture is under the form of crystals which are not anchored to the cooled surface. In suspension crystallization, crystals may be formed in contact with a cooled surface and may be periodically scraped from the cooled surface: said cooled surface is so referred to as a scraped-surface heat exchanger (SSHEs). In other embodiments, crystals may be directly formed in the molten mass. In an embodiment, such a suspension crystallization may comprise a step of crystallization in a growthvessel, which may be coupled to the vessel comprising the SSHEs. In such arrangement, crystals of the crystallized mixtures are first formed, for instance in contact with the SSHEs, and then transferred in the growth vessel, and in particular, in case of the SSHEs, scraped off from the same before being transferred in the growth vessel; most of the crystal growth of the crystallized mixture advantageously occurs on crystals suspended in the melt in a growth vessel. The originally created crystals of the crystallized mixture are advantageously given time to increase in size (grow) in the growth vessel. Furthermore, the crystals of the crystallized mixture are generally kept evenly suspended within the growth vessel by stirring means, generally by an agitator.

The various apparatuses and sub-types for batchwise/semi-batch/continuous solid layer and suspension crystallization are generally discussed in Chapter 9 "Melt Crystallization" by Ulrich et al. in the book "Handbook of Industrial Crystallization", Cambridge University Press, 2019.

Solid-layer crystallization processes comprise static melt and dynamic melt, such as falling film processes. In a preferred embodiment, the crystallization is a static melt crystallization or a flowing melt crystallization, such as a falling film crystallization. For certain embodiments, it may be preferred that the crystallization is a static melt crystallization. In a static melt crystallization, the melt is not moved when contacted with the cooled surface. In particular, static walls (plates, tubes or finned tubes) are placed in a static melt to provide a cooled surface for crystal formation and growth from the static melt. In other embodiments, it may be preferred that the crystallization is a dynamic melt crystallization. In the dynamic melt crystallization processes, flowing (dynamic) melt is contacted with the cooled surface. Dynamic melt crystallization may be carried out as falling film crystallization. In the falling film crystallization, the crystallization apparatus comprises a system of tubes that are cooled from the outside. The melt coming from a feed tank is continuously pumped through the tubes to allow crystallization of the material on the walls of the tubes.

According to certain embodiments, recycle loops may be provided, for increasing the overall yield of the melt crystallization process and decreasing the amount of waste impure residue.

Whichever is the number of melt crystallization sequences in the process of the invention, at each stage n, a crude feed having a certain purity "nc"is completely molten in step a*n*), and partially crystallized in step b*n*); the residue which does not crystallize in step b*n*) is collected as a "n-Residue stream" having a certain purity "n_{R}"; the sweated fraction(s) from any step d*n*) are collected as a "n-Intermediate stream" having a certain purity "m". The crystallized product from stage n constitutes a n-Purified stream having a certain purity "n_{P}", which may then be fed to the subsequent melt crystallization sequence, if appropriate.

Depending on their purity, each of the n-Residue stream and n-Intermediate stream is combined with a crude feed of a precedent stage, wherein the purity n_{R} and n_{I} matches the initial purity of the crude feed of that stage. Ultimately, a purge is performed to remove the waste impure residue.

In an embodiment, the molten mixture is cooled by a pre-determined temperature gradient in cooling step b). The temperature gradient may be constant or may increase over time.

In an embodiment, the invention relates to the use of melt crystallization for purifying a crude bis(sulfonyl)imide mixture comprising a compound of Formula (I) as defined above.

### EXAMPLES

Crude NH₄FSI (5 kg, purity of 93.7 mol-%) was melted under an argon atmosphere in a solid-layer crystallization apparatus (static melt apparatus from Sulzer Chemtech AG). The melted NH₄FSI was crystallized on a metal surface that was cooled below the melting point of NH₄FSI. After 4 h, the crystallized NH₄FSI was separated from the molten residue.

Subsequently, the crystallized NH₄FSI was purified by sweating the crystallized NH₄FSI three times and removing the partial melts 1 to 3 to obtain a 1^{st} purified NH₄FSI. The purity (mol-wt.%) of the purified NH₄FSI, of the residue as well as of the partial melts 1 to 3 (sweating fractions 1 to 3) was determined by ¹⁹F-NMR measurements. The amount of different impurities was analyzed using ionic chromatography.

The above process was repeated using the same process conditions to obtain about 2 kg of a 2^{nd} purified colourless NH₄FSI. The purity and amount of different impurities of the fractions are stated in the Table below.

**Table 1: Purity of NH₄FSI and Impurity Content in the different fractions**

| | Purity (mol-%) by ¹⁹F-NMR | F⁻ (ppm) | FSO₃⁻ (% w/w) |
|---|---|---|---|
| **Crude NH₄FSI** | **94.8** | **4071** | **1.83** |
| 1^{st} residue | 93.3 | 8804 | 0.99 |
| 1^{st} partial melt 1 | 92.1 | 6932 | 2.22 |
| 1^{st} partial melt 2 | 91.2 | 4260 | 2.16 |
| 1^{st} partial melt 3 | 94.10 | 4206 | 1.19 |
| **1^{st} purified NH₄FSI** | **95.1** | **2245** | **1.73** |
| 2^{nd} residue | 93.5 | 5068 | 3.70 |
| 2^{nd} partial melt 1 | 95.1 | 3550 | 1.19 |
| 2^{nd} partial melt 2 | 93.6 | 2909 | 1.84 |
| 2^{nd} partial melt 3 | 94.8 | 2139 | 1.40 |
| **2^{nd} purified NH₄FSI** | **97.1** | **1266** | **1.01** |

## Claims

1. A process for purifying a crude bis(sulfonyl)imide mixture comprising a compound of Formula (I):
[F-SO₂-N-SO₂-R¹]⁻[X]⁺ (I),
wherein R¹ is F or a linear or branched alkyl, substituted with at least one fluorine atom, and X is H or NR^{N}₄, with each of R^{N}, equal to or different from each other, being H or a C₁-C₁₆ hydrocarbon group, preferably R^{N} being H, and wherein the process comprises a melt crystallization.

2. The process according to claim 1, wherein the process comprises the steps of:
a) melting the crude bis(sulfonyl)imide mixture at a temperature exceeding the melting point for the compound of Formula (I) to obtain a molten mixture,
b) cooling the molten mixture at least partially to cause at least partial crystallization of the compound of formula (I), to obtain a crystallized mixture and a molten residue, and
c) separating the molten residue from the crystallized mixture.

3. The process according to claim 1 or 2, wherein the compound of Formula (I) is hydrogen bis(fluorosulfonyl)imide or ammonium bis(fluorosulfonyl)imide.

4. The process according to any one of claims 1 to 3, for at least partially removing at least one impurity selected from the group consisting of fluorides, sulfates, and fluorosulfates compounds; and mixtures of any of the same.

5. The process according to any one of claims 1 to 4, wherein the crystallized mixture has a purity of at least 95.0 wt.-%, preferably of at least 97.0 wt.-%, more preferably of at least 99.0 wt.-%.

6. The process according to any one of claims 1 to 5, wherein the crystallized mixture has a F⁻ content of ≤ 2000 ppm, preferably of ≤ 1500 ppm; a SO₄²⁻ content of ≤ 150 ppm, preferably of ≤ 100 ppm; and/or a FSO₃⁻ content of ≤ 1.8 mol-%, preferably of ≤ 1.1 mol-%.

7. The process according to any one of claims 1 to 6, wherein the process is conducted under an inert atmosphere, preferably under argon; and/or in a moisture-free atmosphere.

8. The process according to any one of claims 2 to 7, wherein the process is a fractionalized melt crystallization and the crystallized mixture is crystallized at least a second time by melt crystallization comprising the steps of:
a2) melting the first crystallized mixture at a temperature exceeding the melting point for the compound of Formula (I) to obtain a second molten mixture,
b2) cooling the second molten mixture at least partially to cause at least partial crystallization of the compound of formula (I), to obtain a second crystallized mixture and a second molten residue, and
c2) separating the second molten residue from the second crystallized mixture.

9. The process according to any one of claims 1 to 8, further comprising a step d) of washing and/or sweating the crystallized mixture; and/or wherein the process is a batchwise, a semi-batch or a continuous process.

10. The process according to any one of claims 1 to 9, wherein the process the process of the invention comprises a number *x* of subsequent melt crystallization process sequences, with *x* being from 2 to 10, wherein the crystallized mixture obtained from each *n-1* melt crystallization process sequence, with *n* being 1 to *x*, is submitted to the steps of:
aₙ) melting the (*n-1)*-crystallized mixture from step d ₙ₋₁) of previous melt crystallization sequence, at a temperature exceeding the melting point for the compound of Formula (I), to obtain a *n*-molten mixture,
bₙ) cooling the *n*-molten mixture at least partially to cause at least partial crystallization of the compound of Formula (I), to obtain a *n-*crystallized mixture and a *n*-molten residue,
cₙ) separating the *n*-crystallized mixture from the *n*-molten residue, and
dₙ) washing and/or sweating the *n*-crystallized mixture.

11. The process according to any one of claims 1 to 10, wherein the crystallization is a solid-layer crystallization.

12. The process according to any one of claims 1 to 11, wherein the crystallization is a static melt crystallization or a flowing melt crystallization, such as a falling film crystallization.

13. The process according to any one of claims 1 to 12, wherein the molten residue is recycled.

14. The process according to any one of claims 1 to 13, wherein the molten mixture is cooled by a pre-determined temperature gradient in step b).

15. Use of melt crystallization for purifying a crude bis(sulfonyl)imide mixture comprising a compound of Formula (I) as defined in one of the above claims.
